# EUROPEAN PATENT APPLICATION

(11) **EP 2 186 396 A2**
(43) Date of publication of application: **19.05.2010**
(21) Application number: 09250749.0
(22) Date of filing: 18.03.2009
(51) Int. Cl.: A01G 29/00

(54) **Plant feeding apparatus**

(30) Priority: 12.11.2008 US 273096
(71) Applicant: Shelton, Thomas, Louisville KY 40223 (US)
(72) Inventor: Shelton, Thomas, Louisville KY 40223 (US)
(74) Representative: Jehan, Robert

(57) **Abstract**

Disclosed is a plant feeding apparatus (100) for evenly discharging a feed solution. The plant feeding apparatus (100) includes a feeding member (102) having a downspout (108) at a delivery end portion (110). The feeding member (102) is capable of retaining the feed solution. Further, the plant feeding apparatus (100) includes a tubular delivery member (112) capable of transferring the feed solution therethrough. The tubular delivery member (112) includes a first end section (114) removably configured to the downspout (108) of the feeding member (102), and a second tapered end section (116) distal to the first end section (114). The second tapered end section (116) is capable of penetrating into soil holding a plant. Further, the tubular delivery member (112) includes a plurality of apertures (124) configured proximal to the second tapered end section (116). The plurality of apertures (124) is capable of evenly discharging the feed solution into the soil.

## Description

### FIELD OF THE INVENTION

The present invention relates generally to an apparatus for feeding and supporting plants, and more particularly, to a plant feeding apparatus for evenly discharging a feed solution into soil holding a plant.

### BACKGROUND OF THE INVENTION

Water and nutrients are essential for the growth of plants. Roots of the plants are capable of absorbing water and nutrients from soil in which the plants are cultivated. However, more often than not, the content of water and nutrients present in the soil is insufficient to support nutritional requirements of the plants.

Accordingly, a sufficient amount of water may be supplied to the plants using irrigational systems such as sprinklers and soakers. Further, fertilizers are supplied to the plants to satisfy nutritional requirements thereof. More specifically, the fertilizers are dissolved in water to form fertilizer solutions, which are then supplied to the plant, usually by techniques such as sprinkling or spraying.

However, use of the aforementioned techniques also have various drawbacks. The various drawbacks include non-uniform distribution of the water and the fertilizers (which fertilizers may be expensive), resulting in wastage thereof and overfeeding of some plants with the water and the fertilizers. Moreover, in some cases, the use of the aforementioned techniques even results in malnourishment of the plants as the water and the fertilizer solutions supplied for the nourishment thereof evaporates before reaching the roots of the plants. Therefore, to overcome the aforementioned disadvantages various feeding apparatuses have been developed that efficiently deliver water and nutrients to plants.

However, the various feeding apparatuses that have been developed for feeding the plants suffer from various shortcomings. Typically the feeding apparatuses are composed of non-biodegradable polymers, such as plastics, which are not environment friendly and a disposal thereof leads to environmental pollution. Further, the feeding apparatuses are bulky and involve complex assemblies, are difficult to operate, i.e., the feeding apparatuses involve a large amount of manual intervention during operation, and are expensive to manufacture. Furthermore, the feeding apparatuses are incapable of effectively supplying water and nutrients to the plants. In addition, most of the feeding apparatuses are incapable of providing any support to the plants during a feeding process. Such a support may be necessary to ensure proper cultivation of certain species of plants, such as a tomato plant, that have weak vines or stems, and which tend to slack during cultivation.

Accordingly, there is a need to develop a plant feeding apparatus, which provides a uniform discharge of water an nutrients to plants. Further, there is a need for a plant feeding apparatus, which is compound of biodegradable materials. Furthermore, there is a need for a plant feeding apparatus, which is light-weight, simple to configure and use, and inexpensive to manufacture. In addition, there is a need for a plant feeding apparatus, which is capable of providing support to plants, such as a tomato plant, for proper growth of the plants.

### SUMMARY OF THE INVENTION

In view of the foregoing disadvantages inherent in the prior art, the general purpose of the present invention is to provide a plant feeding apparatus that may be employed for efficiently feeding plants, which includes all the advantages of the prior art, and overcomes the drawbacks inherent therein.

Accordingly, the present invention can provide a plant feeding apparatus that is capable of evenly discharging a feed solution.

The present invention can also provide a lightweight plant feeding apparatus that may be inexpensive to manufacture and easy to configure.

Preferably, the present invention provides a plant feeding apparatus composed of biodegradable materials to prevent or reduce environmental pollution.

Advantageously, the present invention can provide a plant feeding apparatus that provides support to plants, such as a tomato plant, during the growth of the plants.

There is disclosed herein a plant feeding apparatus which includes a feeding member having a downspout at a delivery end portion. The feeding member is capable of retaining a feed solution. Further, the plant feeding apparatus includes a tubular delivery member capable of transferring the feed solution therethrough. The tubular delivery member includes a first and end section removably configured to the downspout of the feeding member, and a second tapered end section distal to the first end section. The second tapered end section is capable of penetrating into a soil holding a plant. Further, the tubular delivery member includes a plurality of apertures configured proximal to the second tapered end section. The plurality of apertures is capable of evenly discharging the feed solution into the soil.

This together with other embodiments of the present invention, along with the various features of novelty that characterize the present invention, are pointed out with particularity in the claims annexed hereto and form a part of this disclosure. For a better understanding of the present invention, its operating advantages, and the specific objects attained by its uses, reference should be made to the accompanying drawings and the descriptive matter in which there are illustrated exemplary embodiments of the present invention.

### BRIEF DESCRIPTION OF THE DRAWINGS

The advantages and features of the present invention will become better understood with reference to the following detailed description and claims taken in conjunction with the accompanying drawings, in which:

FIG.1 depicts an unassembled view of a plant feeding apparatus, according to an exemplary embodiment of the present invention; and

FIG.2 depicts an assembled view of the plant feeding apparatus of FIG.1, according to an exemplary embodiment of the present invention.

Like reference numerals refer to like parts throughout the description of the drawings.

### DETAILED DESCRIPTION OF THE INVENTION

The exemplary embodiments described herein detail for illustrative purposes are subject to many variations in structure and design. It should be emphasized, however, that the present invention is not limited to a particular plant feeding apparatus, as shown and described. It is understood that various omissions and substitutions of equivalents are contemplated as circumstances may suggest or render expedient, but these are intended to cover the application or implementation without departing from the scope of the claims. Also, it is to be understood that the phraseology and terminology used herein is for the purpose of description and should not be regarded as limiting. The terms "first," "second," and the like, herein do not denote any order, quantity, or importance, but rather are used to distinguish one element from another, and the terms "a" and "an" herein do not denote a limitation of quantity, but rather denote the presence of at least one of the referenced item.

The use of "including," "comprising," or "having" and variations thereof herein is meant to encompass the items listed thereafter and equivalents thereof as well as additional items. Unless limited otherwise, the terms "configured," and variations thereof herein as used broadly and encompass direct and indirect attachments, couplings, and engagements. In addition, the terms "attached" and "coupled" and variations thereof are not restricted to physical or mechanical attachments or couplings.

The preferred embodiment provides a plant feeding apparatus for feeding plants. More specifically, the preferred embodiment provides a plant feeding apparatus for evenly discharging a feed solution into soil holding the plants. It should be understood that the term 'feeding' as used herein, refers to a process of supplying water and nutrients to the plants for supporting growth and life cycles thereof. Accordingly, it will be apparent that the term 'feed solution's as used herein, refers to either pure water or a nutrient solution preferably prepared in water. Further, the term may refer to a liquid or a semi-liquid form of the nutrient solution. A suitable example of a feed solution may be a fertilizer solution prepared by dissolving one or more fertilizers in water.

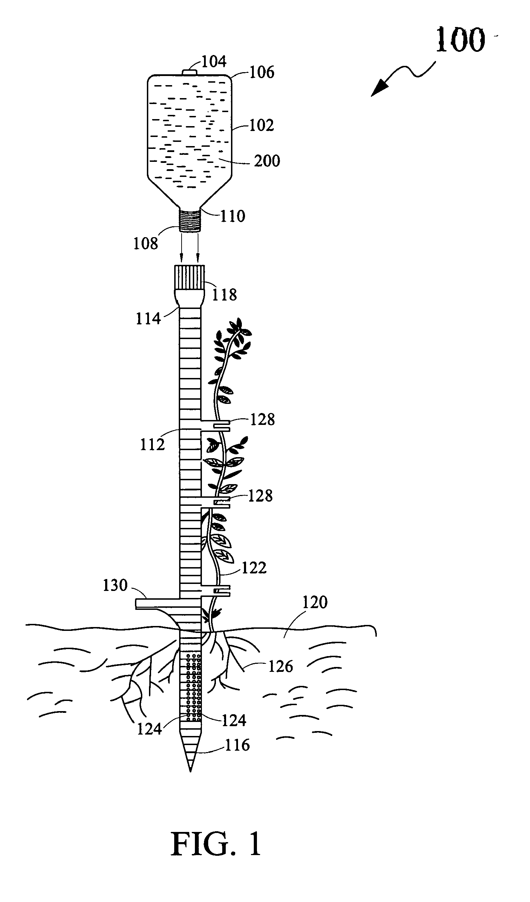

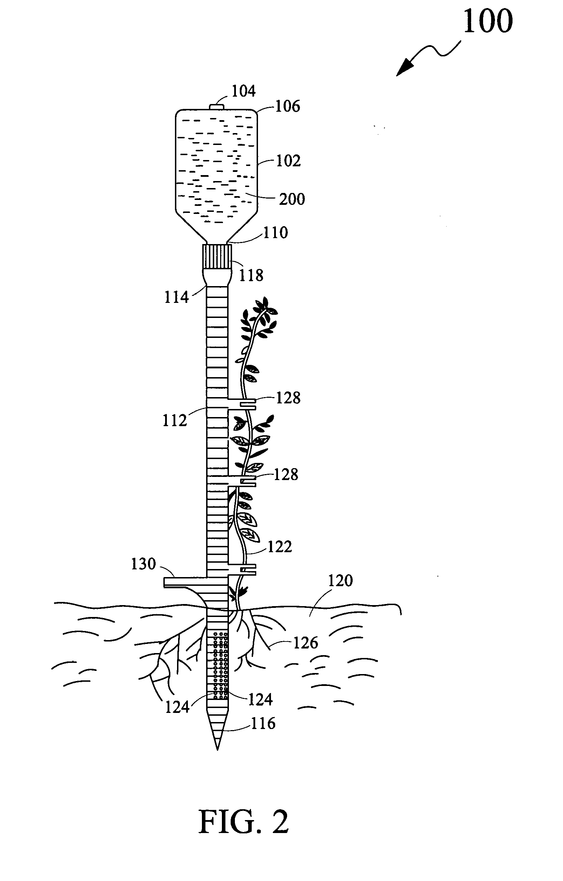

The preferred plant feeding apparatus of the present invention includes a feeding member having a downspout. The feeding member is capable of retaining the feed solution therewithin. Further, the plant feeding apparatus includes a tubular delivery member capable of transferring the feed solution therethrough. The tubular delivery member includes a first end section removably configured to the downspout of the feeding member and a second tapered end se3ction distal to the first end section. The second tapered end section is capable of penetrating into soil that holds a plant. The tubular delivery member includes a plurality of apertures configured proximal to the second tapered end section for evenly discharging the feed solution in the soil holding the plant. The plant feeding apparatus is explained in detail in conjunction with FIG.1 and FIG.2.

As shown in FIG.1 and FIG.2, the feeding apparatus 100 includes a feeding member 102 capable of retaining a feed solution 200 there within. It should be understood that the shape of the feeding member 102 depicted in FIG.1 and FIG.2 is only for exemplary purposes and should not be construed as a limitation to the present invention. Further, the feeding member 102 may be of any diameter sufficient enough for providing a particular 'retaining volume' to the feeding member 102. However, for the purpose of this description, the feeding member 102 has a diameter greater than about 2 inches. Moreover, the feeding member 102 may be composed of biodegradable materials such as bio-plastic materials. Use of the biodegradable materials allows for a proper degradation of the feeding member 102 after use, in order to prevent and/or reduce environmental pollution.

Further, the feeding member 102 may include a ventilation valve 104 configured at a feeding end portion 106 of the feeding member 102. The ventilation valve 104 may provide a means for introducing the feed solution 200 in the feeding member 102. Therefore, an external hose connected to a source of the feed solution 200, such as a water tap, may be connected to the ventilation valve 104. Opening of the ventilation valve 104 drives the feed solution 200 into the feeding member 102. Moreover, the ventilation valve 104 provides a means for controlling the rate of draining the feed solution 200 out of the feeding member 102. Therefore, the ventilation valve 104 when opened exposes the feed solution 200 to the atmosphere thereby providing a driving force (in form of atmospheric pressure) for draining the feed solution 200 out of the feeding member 102. It will be apparent to a person skilled in the art that the ventilation valve 104 when closed prevents the draining of the feed solution 200 out of the feeding member 102. Moreover, it should be understood that any other means providing similar function to that of the ventilation valve 104 may also be employed in the present invention. For example, the feeding member 102 may include a lid instead of the ventilation valve 104 for introducing the feed solution 200 in the feeding member 102.

Furthermore, the feeding member 102 includes a downspout 108 at a delivery end portion 110 thereof. The downspout 108 is provided to guide the feed solution 200 out of the feeding member 102. It will be apparent that the downspout 108 has a diameter less than that of the feeding member 102 for providing a controlled release of the feed solution 200. Furthermore, it will be apparent that the downspout 108 may be an integral part of the feeding member 102 that extends downwards from the feeding member 102.

The plant feeding apparatus 100 further includes a tubular delivery member 112. It should be understood that the shape of the tubular delivery member 112 depicted in FIG.1 and FIG.2 is only for exemplary purposes and should not be construed as a limitation to the present invention. The tubular delivery member 112 has a diameter in accordance with the diameter of the downspout 108 of the feeding member 102. For the purpose of this description, the diameter of the tubular delivery member 112 is about 2 inches. Furthermore, the tubular delivery member 112 may be composed of similar biodegradable materials as were used for manufacturing the feeding member 102.

It will be apparent that the tubular delivery member 112 is capable of transferring the feed solution 200 therethrough upon receiving the feed solution 200 from the feeding member 102. More specifically, the tubular delivery member 112 may include a plurality of channels (not shown) which guides a stream of the feed solution 200 to flow therethrough.

Further, the tubular delivery member 112 includes a first end section 114, and a second tapered end section 116. The first end section 114 of the tubular delivery member 112 is removably configured to the downspout 108 of the feeding member 102 (as depicted in FIG.2). More specifically, a coupling member 118 removably configures the downspout 108 with the first end section 114 of the tubular delivery member 112. Even more specifically, the coupling member 118, which is in form of a rubber ring, has one end removably configured to the first end section 114 of the tubular delivery member 112, and other end removably configured to the downspout 108 of the feeding member 102. It will be apparent that the rubber ring may include threads for removably configuring the first end section 114 of the tubular delivery member 112 and the downspout 108 of the feeding member 102. The coupling member 118 may be a water-tight coupling member that prevents leakage when the feed solution 200 drains from the feeding member 102.

The second tapered end section 116 is positioned distal to the first end section 114. It should be apparent that the second tapered end section 116 of the tubular delivery member 112 may be an integral part thereof. Further, the second tapered end section 116 is provided in the tubular delivery member 112 to erect the plant feeding apparatus 100 into a portion of soil 120 (hereinafter referred to as 'soil portion 120') holding a plant 122. More specifically, the second tapered end section 116 extends as a tapered structure, which penetrates the soil portion 120 when force is applied by a user (not shown).

The tubular delivery member 112 further includes a plurality of apertures 124 (hereinafter referred to as 'apertures 124') configured proximal to the second tapered end section 116. The apertures 124 are provided to evenly discharge the feed solution 200 in the soil portion 120) holding the plant 122, and more specifically, to roots 126 of the plant 122. More specifically, the apertures 124 have similar diameters thereby providing an equal discharge of the feed solution 200 therethrough into the soil portion 120. For the purpose of this description, the diameter of each of the apertures 124 is less than about 2 inches. Therefore, the plant 122 receives a controlled and even distribution of the feed solution 200 from the plant feeding apparatus 100, through the aperture 124.

In addition, the tubular delivery member 112 may include a plurality of support members 128 (hereinafter referred to as 'support members 128'). The support members 128 are provided to receive parts of the plant 122 to support the plant 122. It will be apparent to a person skilled in the art that certain species of the plants, such as tomatoes, have a weak stem that bends or falls while wearing vegetables or fruits. The support members 128 permit expansion and changes to the shape of the plant parts, which changes occur as a result of the growth of the plant.

For the purpose of this description, the support members 128 are in form of protrusions extending outwardly from the tubular delivery member 112, and having constrictions capable of receiving various parts of the plant 122. It will be apparent that the protrusions may be integral to the construction of the tubular delivery member 112. However, it should be understood that other supporting means such as hooks and clasps, may also be used as the support members 128. In an embodiment, a user may attach a "scarecrow! or other objects associated with the cultivation of plants to the support members 128.

In order to facilitate penetration of the second tapered end section 116, the tubular delivery member 112 may include a push rod 130. The push rod 130 is configured on the tubular delivery member 112 proximal to the second tapered end section 116, to facilitate the penetration of the second tapered end section 116 into the soil portion 120. More specifically, the push rod 130 has a structure that enables the user to apply the required pressure for allowing penetration of the second tapered end section 116 in the soil portion 120. Even more specifically, the push rod 130 may enable the user to apply the required pressure using his/her foot for penetrating the second tapered end section 116 in the soil portion 120. In an embodiment of the present invention, the push rod 130 may extend outwardly from the tubular delivery member 112 and may be an integral part thereof. In an embodiment, the point of extension of the push rod 130 from the tubular delivery member 112 may be identical on a plurality of plant feeding apparatuses 100 such that the user may utilize the push rods 130 on the plurality of apparatuses 100 to orient the plurality of apparatuses 100 at a consistent or specified height.

The plant feeding apparatus 100 as described herein has a height of about 7 feet. Further, the plant feeding apparatus 100 is a light weight apparatus due to use of lightweight materials employed for manufacturing various components thereof. Furthermore, the plant feeding apparatus 100 may have an aesthetic appeal by coating an exterior surface of the plant feeding apparatus 100 with paint. The paint may have a color selected by a manufacturer or a user of the plant feeding apparatus 100. In addition, the plant feeding apparatus 100 may include a label engraved or imprinted on the exterior surface depicting a trade name thereof.

In use, the plant feeding apparatus 100 evenly discharges the feed solution 200 in the soil portion 120 holding the plant 122. More specifically, during operation of the plant feeding apparatus 100, the feed solution 200 is introduced into the feeding member 102 of the plant feeding apparatus 100. Thereafter, the tubular delivery member 112, which is configured to the feeding member 102, receives the feed solution 200 from the feeding member 102. Further, the tubular delivery member 112 transfers the feed solution 200 therethrough to the apertures 124 configured proximal to the second tapered end section 116. Accordingly, the feed solution 200 is evenly discharged from the apertures 124 into the soil portion 120 holding the plant 122. Moreover, during operation of the plant feeding apparatus 100, the support members 128 may receive parts of the plant 122 therein to provide a support to the plant 122.

Based on the forgoing, the preferred embodiment provides a plant feeding apparatus, such as a plant feeding apparatus 100, capable of evenly discharging a feed solution into soil holding a plant. In addition, the plant feeding apparatus provides support to the plant ensuring a proper growth thereof. Further, use of the plant feeding apparatus ensures a controlled distribution of the feed solution into the soil from where the roots of the plant may easily absorb the feed solution. Furthermore, the plant feeding apparatus is easy to configure and operate, and inexpensive to manufacture. In addition, the plant feeding apparatus is composed of biodegradable polymers thereby serving as an environment friendly apparatus.

The foregoing descriptions of specific embodiments have been presented for purposes of illustration and description. They are not intended to be exhaustive or to limit the claims to the precise forms disclosed, and obviously many modifications and variations are possible in light of the above teaching. The embodiments were chosen and described in order to best explain the principles of the present invention and its practical application, and thereby enable others skilled in the art to best utilize the present invention and various embodiments with various modifications as are suited to the particular use contemplated. It is understood that various omissions and substitutions of equivalents are contemplated as circumstances may suggest or render expedient, but such are intended to cover the application or implementation without departing from the scope of the claims.

The disclosures in United States patent application no. 12/273,096, from which this application claims priority, and in the abstract accompanying this applications are incorporated herein by reference.

## Claims

1. A plant feeding apparatus for evenly discharging a feed solution, the plant feeding apparatus including:
a feeding member provided with a downspout at a delivery end portion, the feeding member capable of retaining the feed solution; and
a tubular delivery member capable of transferring the feed solution therethrough, the tubular delivery member including a first end section removably configured to the downspout of the feeding member, and a second tapered end section distal to the first end section, the second tapered end section capable of penetrating into soil holding a plant,
wherein the tubular delivery member includes a plurality of apertures configured proximal to the second tapered end section for evenly discharging the feed solution into the soil.

2. The plant feeding apparatus of claim 1, including a coupling member configured between the feeding member and the first end section of the tubular delivery member, the coupling member capable of removably configuring the feeding member to the first end section of the tubular delivery member.

3. The plant feeding apparatus of claim 1 or 2, wherein the tubular delivery member includes a push rod configured proximal to the second tapered end section to facilitate penetration of the second tapered end section of the tubular delivery member into the soil.

4. The plant feeding apparatus of claim 1, 2 or 3, wherein the feeding member includes a ventilation valve configured at a feeding end portion positioned opposite to the delivery end portion of the feeding member.

5. The plant feeding apparatus of any preceding claim, wherein the tubular delivery member includes a plurality of support members extending outwardly from the tubular delivery member, the plurality of support members capable of receiving and supporting parts of the plant.
